# EUROPEAN PATENT SPECIFICATION

(11) **EP 2 959 132 B1**
(45) Date of publication and mention of the grant of the patent: **09.09.2020**
(21) Application number: 14753607.2
(22) Date of filing: 20.02.2014
(51) Int. Cl.: F02C 7/22, F23R 3/28, F02C 7/232

(54) **SELF-PURGING FUEL INJECTOR SYSTEM FOR A GAS TURBINE ENGINE**
SELBSTREINIGENDES KRAFTSTOFFINJEKTORSYSTEM FÜR EINEN GASTURBINENMOTOR
SYSTÈME D'INJECTEUR DE COMBUSTIBLE À PURGE AUTOMATIQUE POUR TURBINE À GAZ

(30) Priority: 20.02.2013 US 201361767089 P
(43) Date of publication of application: 30.12.2015
(73) Proprietor: United Technologies Corporation, Farmington, CT 06032 (US)
(72) Inventor: KRAMER, Stephen K., Cromwell, Connecticut 06416 (US)
(74) Representative: Dehns
(86) International application number: PCT/US2014/017355
(87) International publication number: WO 2014/130650

(56) References cited:
- DE-A1- 3 916 477
- US-A- 3 344 602
- US-A- 4 041 695
- US-A- 5 694 764
- US-A1- 2006 066 106
- US-A1- 2008 250 792
- US-A1- 2009 071 119
- US-A1- 2009 293 492
- US-A1- 2012 167 545
- US-B1- 6 244 034
- US-B1- 6 244 034

## Description

### BACKGROUND

The present disclosure relates to a gas turbine engine and, more particularly, to a fuel injector system therefor.

Gas turbine engines, such as those which power modern commercial and military aircraft, include a compressor section to pressurize a supply of air, a combustor section to burn a hydrocarbon fuel in the presence of the pressurized air, and a turbine section to extract energy from the resultant combustion gases and generate thrust.

The combustor section generally includes a multiple of of circumferentially distributed fuel injectors that axially project into a forward section of a combustion chamber to supply the fuel for mixing with the pressurized air. For non-staged combustion systems, fuel passage are drained so as not to drip fuel into the combustion chamber after shut down. For staged combustion systems, fuel lines also need to be purged of fuel to avoid coking when that stage is not operated.

Various conventional purge systems such as a drafted purge system are available. Although effective, the air temperature of the air utilized to purge the fuel is at a relatively high temperature and may facilitate coke formation. Coke formation result in a narrowed fuel lines, uneven fuel burn and increased maintenance requirements as fuel injectors are often located in relatively inaccessible interior portions of the engine.

US 6,244,034 B1 discloses a prior art fuel injector system in accordance with the preamble of claim 1.

US 3,344,602 discloses a prior art fuel purging system for gas turbine engines.

US 4,041,695 discloses a prior art fuel system pneumatic purge apparatus and method.

US 2009/0071119 A1 discloses a prior art method and system for protecting gas turbine fuel injectors.

DE 3916477 A1 discloses a prior art removing fuel from injection nozzle involves releasing compressed air from storage vessel.

US 2009/0293492 A1 discloses a prior art combustion apparatus.

### SUMMARY

According to a first aspect of the present invention, there is provided a fuel injector system as set forth in claim 1.

In a further embodiment of any of the foregoing embodiments of the present invention, the first valve is a check valve.

In a further embodiment of any of the foregoing embodiments of the present invention, the second passage is in communication with a fuel passage.

In a further embodiment of any of the foregoing embodiments of the present invention, the fuel passage is in communication with a fuel injector.

In a further embodiment of any of the foregoing embodiments of the present invention, the fuel passage is a portion of a fuel manifold.

In a further embodiment of any of the foregoing embodiments of the present invention, the fuel passage is a fuel circuit of a fuel injector.

According to a further aspect of the present invention, there is provided a method as set forth in claim 7.

These features and elements as well as the operation of the invention will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a partial longitudinal schematic sectional view of a combustor section according to one non-limiting embodiment that may be used with the gas turbine engine shown in Figure 1;
Figure 3 is a perspective schematic sectional view a fuel injector system;
Figure 4 is schematic sectional view a fuel injector;
Figure 5 is a schematic view of a self-purge system in one disclosed non-limiting embodiment in a first position;
Figure 6 is a schematic view of a self-purge system of Figure 5 in a second position;
Figure 7 is a schematic view of a self-purge system in another disclosed non-limiting embodiment in a first position;
Figure 8 is a schematic view of a self-purge system of Figure 7 in a second position;
Figure 9 is a schematic view of an actively actuated self-purge system in another disclosed non-limiting embodiment; and
Figure 10 is a schematic block diagram of the logic for the actively actuated self-purge system.

### DETAILED DESCRIPTION

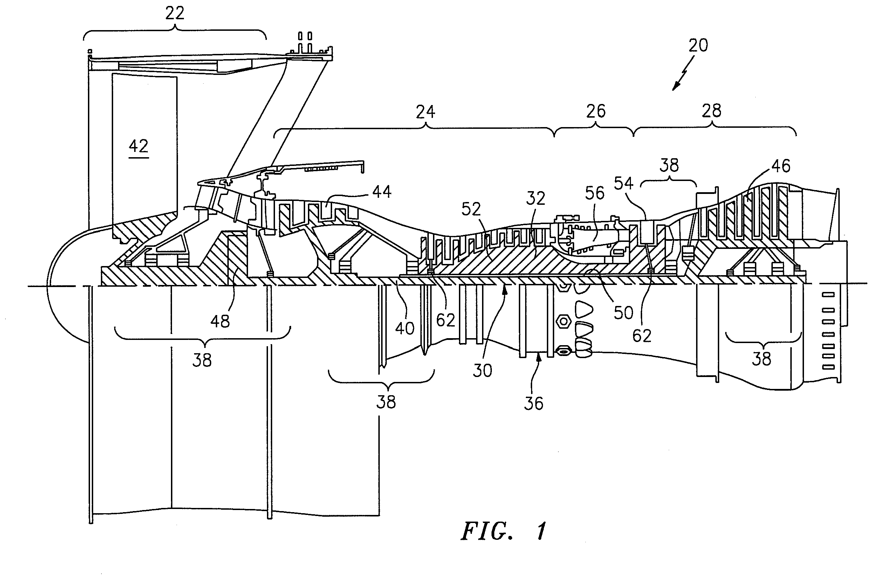

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines such as turbojet, turboshaft, low-bypass turbofan, variable cycle and three-spool (plus fan) engines wherein an intermediate spool includes an intermediate pressure compressor (IPC) between the LPC and HPC and an intermediate pressure turbine (IPT) between the HPT and LPT.

The engine 20 generally includes a low spool 30 and a high spool 32 mounted for rotation about an engine central longitudinal axis A relative to an engine case structure 36 via several bearing structures 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system.

The high spool 32 includes an outer shaft 50 that interconnects a high pressure compressor 52 ("HPC") and high pressure turbine 54 ("HPT"). A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

Core airflow is compressed by the low pressure compressor 44 then the high pressure compressor 52, mixed with the fuel and burned in the combustor 56, then expanded over the high pressure turbine 54 and low pressure turbine 46. The turbines 54, 46 rotationally drive the respective low spool 30 and high spool 32 in response to the expansion.

The main engine shafts 40, 50 are supported at a plurality of points by bearing structures 38 within the case structure 36. It should be understood that various bearing structures 38 at various locations may alternatively or additionally be provided.

In one non-limiting example, the gas turbine engine 20 is a high-bypass geared aircraft engine. In a further example, the gas turbine engine 20 bypass ratio is greater than about six (6:1). The geared architecture 48 can include an epicyclic gear train, such as a planetary gear system or other gear system. The example epicyclic gear train has a gear reduction ratio of greater than about 2.3, and in another example is greater than about 2.5:1. The geared turbofan enables operation of the low spool 30 at higher speeds which can increase the operational efficiency of the low pressure compressor 44 and low pressure turbine 46 and render increased pressure in a fewer number of stages.

A pressure ratio associated with the low pressure turbine 46 is pressure measured prior to the inlet of the low pressure turbine 46 as related to the pressure at the outlet of the low pressure turbine 46 prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 44, and the low pressure turbine 46 has a pressure ratio that is greater than about 5 (5:1). It should be understood, however, that the above parameters are only exemplary of one embodiment of a geared architecture engine and that the present disclosure is applicable to other gas turbine engines including direct drive turbofans.

In one embodiment, a significant amount of thrust is provided by the bypass flow due to the high bypass ratio. The fan section 22 of the gas turbine engine 20 is designed for a particular flight condition - typically cruise at about 0.8 Mach and about 35,000 feet (10,668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of "T" / 518.7⁰⁵ in which "T" represents the ambient temperature in degrees Rankine (where degrees Rankine = K x 9/5). The Low Corrected Fan Tip Speed according to one non-limiting embodiment of the example gas turbine engine 20 is less than about 1150 fps (351 m/s).

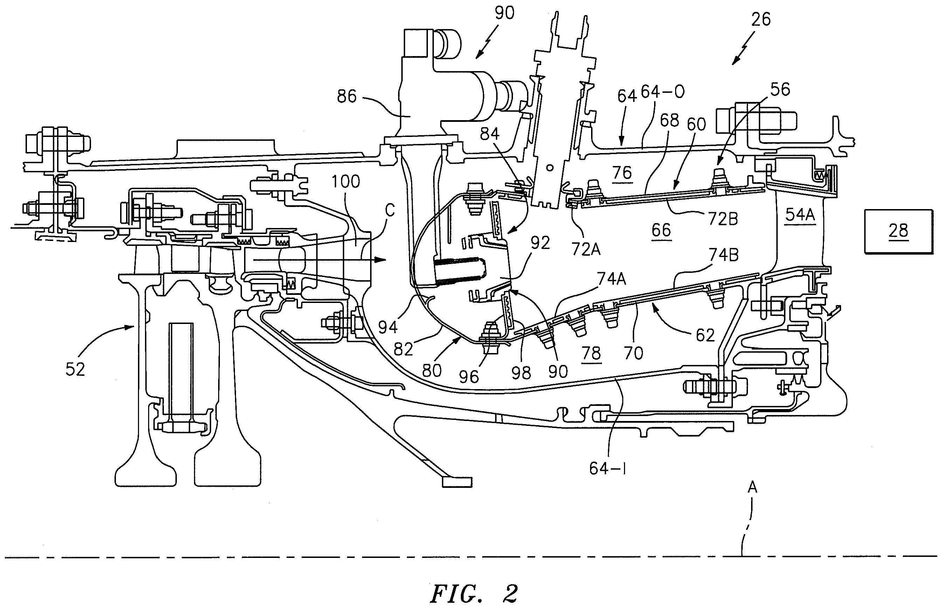

With reference to Figure 2, the combustor 56 generally includes an outer liner 60, an inner liner 62 and a pressure source 64 such as a diffuser case module. The outer liner 60 and the inner liner 62 are spaced apart such that a combustion chamber 66 is defined therebetween. The combustion chamber 66 is generally annular in shape. The outer liner 60 is spaced radially inward from an outer diffuser case 65 of the pressure source 64 to define an annular outer plenum 76. The inner liner 62 is spaced radially outward from an inner diffuser case 67 of the pressure source 64 to define an annular inner plenum 78. It should be understood that although a particular combustor is illustrated, other combustor types with various combustor liner arrangements will also benefit herefrom. It should be further understood that the disclosed cooling flow paths are but an illustrated embodiment and should not be limited only thereto.

The liners 60, 62 contain the combustion products for direction toward the turbine section 28. Each liner 60, 62 generally includes a respective support shell 68, 70 which supports one or more heat shields 72, 74 which are attached to a hot side of the respective support shell 68, 70 with fasteners 75 such as with studs and nuts. In one disclosed non- limiting embodiment, the array includes a multiple of forward heat shields 74-1 and a multiple of aft heat shields 74-2 that passage the hot side of the inner support shell 70.

The combustor 56 also includes a forward assembly 80 immediately downstream of the compressor section 24 to receive compressed airflow therefrom. The forward assembly 80 generally includes an annular hood 82, a bulkhead assembly 84, a multiple of fuel injectors 86 (one shown) and a multiple of fuel injector guides 90 (one shown). Each of the fuel injector guides 90 is circumferentially aligned with one of the hood ports 94 to project through the bulkhead assembly 84. Each bulkhead assembly 84 includes a bulkhead support shell 96 secured to the liners 60, 62, and a multiple of circumferentially distributed bulkhead heat shields 98 secured to the bulkhead support shell 96 around the central opening

The annular hood 82 extends radially between, and is secured to, the forwardmost ends of the liners 60, 62. The annular hood 82 includes a multiple of circumferentially distributed hood ports 94 that accommodate the respective fuel injector 86 and introduce air into the forward end of the combustion chamber 66 through a central opening. Each fuel injector 86 may be secured to the diffuser case module 64 and project through one of the hood ports 94 and through the central opening within the respective fuel injector guide 90.

The forward assembly 80 introduces core combustion air into the forward end of the combustion chamber 66 while the remainder enters the annular outer plenum 76 and the annular inner plenum 78. The multiple of fuel injectors 86 and surrounding structure generate a blended fuel-air mixture that supports combustion in the combustion chamber 66.

Opposite the forward assembly 80, the outer and inner support shells 68, 70 are mounted to a first row of Nozzle Guide Vanes (NGVs) 54A in the HPT 54. In one disclosed non-limiting embodiment, thirty-two (32) NGVs 54A are located immediately downstream of the combustor 56 as the first static vane structure upstream of a first turbine rotor in the turbine section 28. The NGVs 54A are static engine components which direct core airflow combustion gases onto the turbine blades of the first turbine rotor in the turbine section 28 to facilitate the conversion of pressure energy into kinetic energy. The core airflow combustion gases are also accelerated by the NGVs 54A because of their convergent shape and are typically given a "spin" or a "swirl" in the direction of turbine rotor rotation. The turbine rotor blades absorb this energy to drive the turbine rotor at high speed.

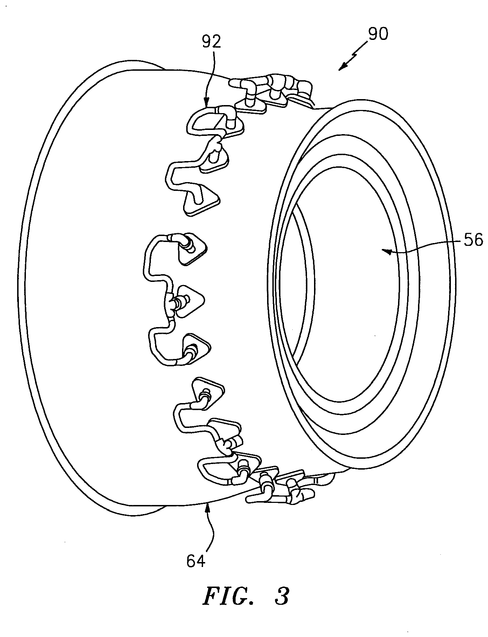

A fuel injector system 90 generally includes one or more fuel injector supply manifolds 92 from which a multiple of fuel injectors 86 extend. The fuel injector supply manifolds 92 are located circumferentially around a diffuser case module 64 (Figure 3) to communicate fuel to the multiple of fuel injectors 86 to inject fuel under pressure into the combustor 56 for ignition. It should be appreciated that the fuel injector systems 90 will benefit herefrom. Furthermore, fuel injector systems for other engine sections such as an augmentor section will also benefit herefrom.

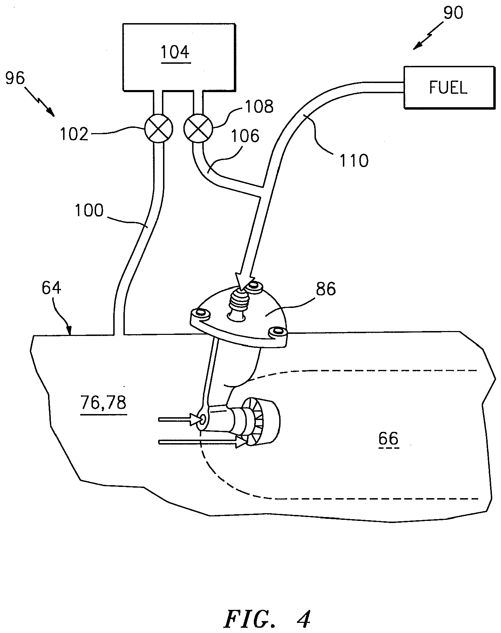

With reference to Figure 4, the fuel injector system 90 includes one or more self-purge systems 96. The self-purge system 96 may be utilized for the entire fuel injector system 90, each or subsets of fuel injectors 86 and/or for each fuel circuit in a staged combustion system. That is, the fuel injector system 90 may include primary, secondary and further fuel circuits to provide staged combustion and each circuit may include, in one disclosed non-limiting embodiment, a separate self-purge system 96 to provide independent purge.

Each self-purge system 96 generally includes a first passage 100, a first valve 102, an accumulator 104, a second passage 106 and a second valve 108. It should be appreciated that although particular discrete components are schematically illustrated, the components may be combined and/or integrated directly into the respective fuel injector 86, fuel manifold 92 and/or the diffuser case module 64 (Figure 3).

The first passage 100 may be, for example, a separate passage or integral with the respective fuel injectors 86. The first valve 102 communicates with the first passage 100 and the first passage 100 is in communication with a pressure source 64, the diffuser case module. The first valve 102 is a check valve such as, for example, a flapper valve, a ball valve, a lift valve, a diaphragm valve, etc.

The second valve 108 communicates with the second passage 106 and the second passage 106 is in communication with a fuel passage 110. The second valve 108 operates in response to a differential pressure between the first passage 100 and the second passage 106 and may be, for example, a slide valve, a ball valve or other differential pressure interface.

The fuel passage 110 may be in communication with the respective fuel injector 86, the fuel manifold 92 or a specific fuel circuit of a staged system. Alternatively, the fuel passage 110 may be integral with the respective fuel injector 86, the fuel manifold 92 or a specific fuel circuit of a staged system. That is, the fuel passage 110 is representative of a portion of the fuel manifold 92 of the fuel injector system 90 that is to be purged and should not be considered limited to only particular components, passages, lines, or circuits.

In operation, as the engine spools up, high-pressure air from within the diffuser case module 64 charges the accumulator 104 through the first passage 100 and the first valve 102. That is, when the pressure in the pressure source 64, such as the annular outer plenum 76 and the annular inner plenum 78, is greater than the pressure in the accumulator 104, the first valve 102 is open and the accumulator 104 is pressurized. The accumulator 104 is thereby charged until the pressure in the pressure source 64 is less than or equal to the pressure in the accumulator 104. The air in the accumulator 104 will also be at approximately the same temperature as the fuel since the accumulator 104 is essentially in contact with the fuel through the fuel injectors 86.

Then, when the pressure in the fuel passage 110 decreases below the pressure within the accumulator 104, such as when the fuel manifold 92 or the particular fuel circuit is shut down, the differential pressure causes the second valve 108 to open. The air at the relatively high pressure within the accumulator 104 is thereby released to purges the fuel passage 110.

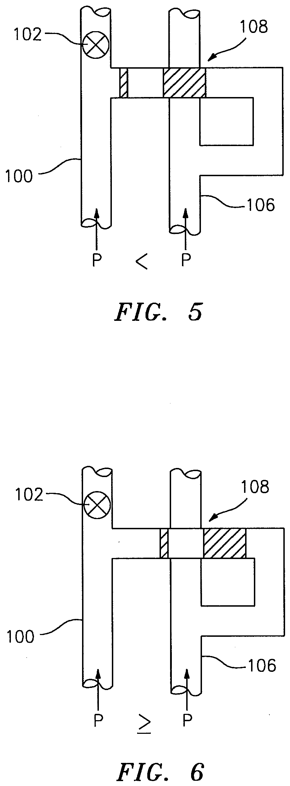

With reference to Figure 5, one disclosed non-limiting embodiment of the second valve 108 includes a slide 120 that opens and closes the second passage 106 in response to a differential pressure between the first passage 100 and the second passage 106. When the pressure in the first passage 100 is greater than or equal to the pressure in the second passage 106, the slide 120 is open and the air at the relatively high pressure from within the accumulator 104 is thereby released to purges the fuel passage 110. When the pressure in the first passage 100 is less than the pressure in the second passage 106, the slide 120 remains closed and pressure is maintained within the accumulator 104 (Figure 6).

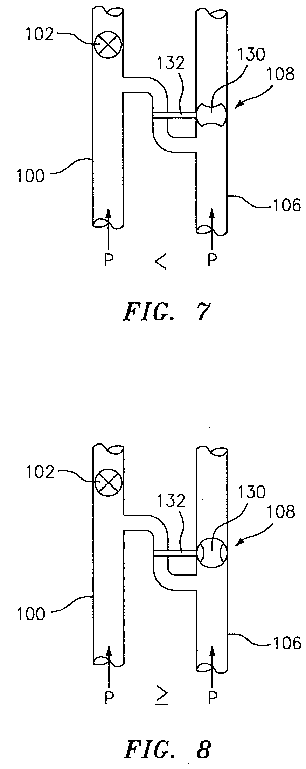

With reference to Figure 7, another disclosed non-limiting embodiment of the second valve 108 includes a ball valve 130 with a spindle 132. The ball valve 130 opens and closes the second passage 106 in response to the differential pressure between the first passage 100 and the second passage 106 that operates on the spindle 132. The ball valve 130 may be biased to the closed position. When the pressure in the first passage 100 is greater than or equal to the pressure in the second passage 106, the spindle 132 is driven to open the ball valve 130 and the relatively high pressure from within the accumulator 104 is thereby released to purges the fuel passage 110. When the pressure in the first passage 100 is less than the pressure in the second passage 106, the ball valve 130 remains closed and pressure is maintained within the accumulator 104 (Figure 8).

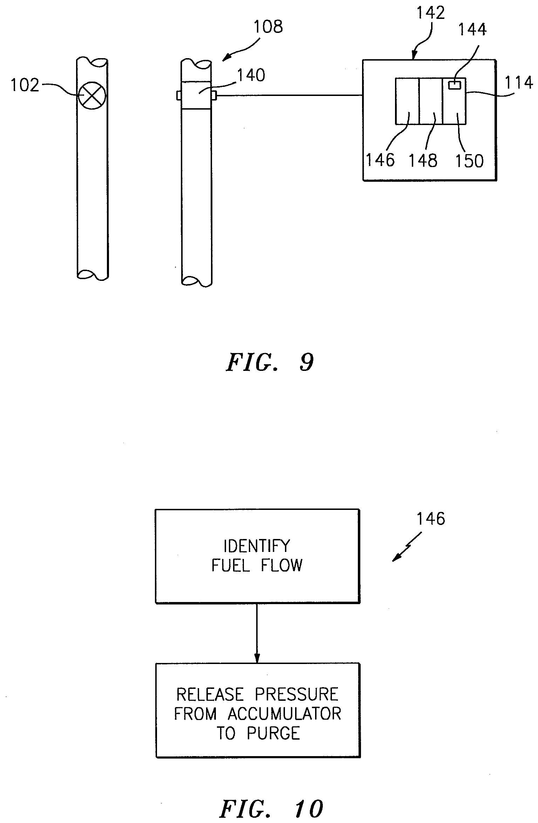

With reference to Figure 9, another disclosed non-limiting embodiment of the second valve 108 includes an active valve 140 selectively opened and closed in response to a control subsystem 142. The control subsystem 142 generally includes a control module 144 that executes fuel purge logic 146 to provide an active identification of a fuel flow (Figure 10). The functions of the logic 146 are disclosed in terms of functional block diagrams, and it should be understood by those skilled in the art with the benefit of this disclosure that these functions may be enacted in either dedicated hardware circuitry or programmed software routines capable of execution in a microprocessor based electronics control embodiment. In one non-limiting embodiment, the control module 144 may be a portion of a flight control computer, a portion of a Full Authority Digital Engine Control (FADEC), a stand-alone unit or other system.

The control module 144 typically includes a processor 148, a memory 150, and an interface 152. The processor 148 may be any type of known microprocessor having desired performance characteristics. The memory 150 may be any computer readable medium which stores data and control algorithms such as logic 146 as described herein. The interface 152 facilitates communication with other components such as a flow meter. It should be appreciated that various other components such as sensors, actuators and other subsystems may be utilized herewith.

The self-purge system 96 operates to minimize or prevent the environmental release of fuel after the engine has spooled down. In staged systems, the self-purge system 96 purges the liners when that particular fuel circuit is not operational to thereby minimize or prevent coking in the passage.

## Claims

1. A fuel injector system (90) for a gas turbine engine (20) comprising:
an accumulator (104);
a first passage (100) in communication with said accumulator (104) and a pressure source (64);
a first valve (102) in communication with said first passage (100);
a second passage (106) in communication with said accumulator (104); and
a second valve (108) in communication with said second passage (106);
**characterised in that**:
said pressure source (64) is a diffuser case module;
said second valve (108) is a differential pressure interface configured to operate in response to a differential pressure between said first passage (100) and said second passage (106).

2. The fuel injector system (90) as recited in claim 1, wherein said first valve (102) is a check valve.

3. The fuel injector system (90) as recited in claim 1 or 2, wherein said second passage (106) is in communication with a fuel passage (110).

4. The fuel injector system (90) as recited in claim 3, wherein said fuel passage (110) is in communication with a fuel injector (86).

5. The fuel injector system (90) as recited in claim 3, wherein said fuel passage (110) is a portion of a fuel manifold (92).

6. The fuel injector system (90) as recited in claim 3, wherein said fuel passage (110) is a fuel circuit of a fuel injector.

7. A method of self-purging the fuel injector of claim 1, the method comprising:
selectively releasing air from an accumulator (104) to purge the fuel injector, wherein the selectively releasing is in response to a differential pressure; and
selectively charging the accumulator (104) from a diffuser case module.

8. The method as recited in claim 7, wherein the selectively releasing is in response to an active identification of a fuel flow.

## Patentansprüche

1. Kraftstoffinjektorsystem (90) für ein Gasturbinentriebwerk (20), das Folgendes umfasst:
einen Druckspeicher (104);
einen ersten Kanal (100) in Kommunikation mit dem Druckspeicher (104) und einer Druckquelle (64);
ein erstes Ventil (102) in Kommunikation mit dem ersten Kanal (100);
einen zweiten Kanal (106) in Kommunikation mit dem Druckspeicher (104); und
ein zweites Ventil (108) in Kommunikation mit dem zweiten Kanal (106);
**dadurch gekennzeichnet, dass**:
die Druckquelle (64) ein Diffusergehäusemodul ist;
das zweite Ventil (108) eine Differenzdruckschnittstelle ist, die dazu konfiguriert ist, als Reaktion auf einen Differenzdruck zwischen dem ersten Kanal (100) und dem zweiten Kanal (106) betrieben zu werden.

2. Kraftstoffinjektorsystem (90) nach Anspruch 1, wobei das erste Ventil (102) ein Rückschlagventil ist.

3. Kraftstoffinjektorsystem (90) nach Anspruch 1 oder 2, wobei der zweite Kanal (106) in Kommunikation mit einem Kraftstoffkanal (110) steht.

4. Kraftstoffinjektorsystem (90) nach Anspruch 3, wobei der Kraftstoffkanal (110) in Kommunikation mit einem Kraftstoffinjektor (86) steht.

5. Kraftstoffinjektorsystem (90) nach Anspruch 3, wobei der Kraftstoffkanal (110) ein Abschnitt eines Kraftstoffverteilers (92) ist.

6. Kraftstoffinjektorsystem (90) nach Anspruch 3, wobei der Kraftstoffkanal (110) ein Kraftstoffkreislauf eines Kraftstoffinjektors ist.

7. Verfahren zum Selbstreinigen des Kraftstoffinjektors nach Anspruch 1, wobei das Verfahren Folgendes umfasst:
selektives Ablassen von Luft aus dem Druckspeicher (104), um den Kraftstoffinjektor zu reinigen, wobei das selektive Ablassen als Reaktion auf einen Differenzdruck stattfindet; und
selektives Aufladen des Druckspeichers (104) von einem Diffusergehäusemodul.

8. Verfahren nach Anspruch 7, wobei das selektive Ablassen als Reaktion auf eine aktive Identifizierung einer Kraftstoffströmung stattfindet.

## Revendications

1. Système d'injecteur de combustible (90) pour un moteur à turbine à gaz (20) comprenant :
un accumulateur (104) ;
un premier passage (100) en communication avec ledit accumulateur (104) et une source de pression (64) ;
un premier clapet (102) en communication avec ledit premier passage (100) ;
un second passage (106) en communication avec ledit accumulateur (104) ; et
un second clapet (108) en communication avec ledit second passage (106) ;
**caractérisé en ce que** :
ladite source de pression (64) est un module de carter de diffuseur ;
ledit second clapet (108) est une interface de pression différentielle configurée pour fonctionner en réponse à une pression différentielle entre ledit premier passage (100) et ledit second passage (106).

2. Système d'injecteur de combustible (90) selon la revendication 1, dans lequel ledit premier clapet (102) est un clapet antiretour.

3. Système d'injecteur de combustible (90) selon la revendication 1 ou 2, dans lequel ledit second passage (106) est en communication avec un passage de combustible (110).

4. Système d'injecteur de combustible (90) selon la revendication 3, dans lequel ledit passage de combustible (110) est en communication avec un injecteur de combustible (86).

5. Système d'injecteur de combustible (90) selon la revendication 3, dans lequel ledit passage de combustible (110) est une partie d'un collecteur de combustible (92).

6. Système d'injecteur de combustible (90) selon la revendication 3, dans lequel ledit passage de combustible (110) est un circuit de combustible d'un injecteur de combustible.

7. Procédé d'injecteur de combustible à purge automatique selon la revendication 1, le procédé comprenant :
la libération sélective de l'air d'un accumulateur (104) pour purger l'injecteur de combustible,
dans lequel la libération sélective est en réponse à une pression différentielle ; et
la charge sélective de l'accumulateur (104) depuis un module de carter de diffuseur.

8. Procédé selon la revendication 7, dans lequel la libération sélective est en réponse à une identification active d'un écoulement de combustible.
